# EUROPÄISCHE PATENTANMELDUNG

(11) **EP 4 838 480 A1**
(43) Veröffentlichungstag der Anmeldung: **11.11.2026**
(21) Anmeldenummer: 25175205.1
(22) Anmeldetag: 08.05.2025
(51) Int. Cl.: G06V 10/25, G06T 7/00, G06V 10/774

(54) **VERFAHREN UND SYSTEM ZUM ERKENNEN EINES OBJEKTS IN EINEM BILD**

(71) Anmelder: Siemens Aktiengesellschaft, 80333 München (DE)
(72) Erfinder: Schall, Daniel, 2020 Hollabrunn (AT)
(74) Vertreter: Siemens Patent Attorneys

(57) **Zusammenfassung**

Computer-implementiertes Verfahren zum Erkennen eines Objekts in einem Bild, welches durch ein Klienten-Server-System mit einem Server und verbundenen Klienten ausgeführt wird, wobei folgende Schritte ausgeführt werden:
a) Bereitstellen einer jeweiligen lokalen Menge an Bildern mit dem Objekt an die jeweiligen Klienten,
b) Bereitstellen eines vortrainierten Grund-Modells zur Objekterkennung, wobei das Modell dazu eingerichtet ist, eine Maske und eine Markierung für einen ausgewählten Bereich eines Bildes zu erzeugen,
c) Definieren von zumindest einem jeweiligen ausgewählten Bereich in den Bildern aus der jeweiligen lokalen Menge an Bildern, welcher geschützt werden soll,
d) Erzeugen einer jeweiligen lokalen Maske für den zumindest einen ausgewählten Bereich und Anwenden der jeweiligen lokalen Maske auf die Bilder,
e) Erzeugen von einer jeweiligen lokalen Markierung für den zumindest einen ausgewählten Bereich mithilfe des Grund-Modells und Beschriften der Bilder mit der jeweiligen lokalen Markierung,
f) Trainieren eines jeweiligen lokalen Erkennungs-Modells auf Basis föderierten Lernens mit den jeweiligen lokalen maskierten und beschrifteten Bildern, und Aggregieren der jeweiligen lokalen Erkennungs-Modelle zu einem globalen Erkennungs-Modell am Server, und Verteilen des globalen Erkennungs-Modells vom Server an die Klienten,
g) Bereitstellen eines weiteren Bildes mit dem Objekt an einen, unter den Klienten ausgewählten Klienten,
h) Erkennen des Objekts im weiteren Bild mithilfe des empfangenen globalen Erkennungs-Modells am ausgewählten Klienten.

## Beschreibung

Die Erfindung betrifft ein computer-implementiertes Verfahren und ein System zum Erkennen eines Objekts in einem Bild.

Die Erfindung betrifft ferner ein Computer-Programm-Produkt.

Im Zusammenhang mit der visuellen Inspektion von Produkten wie der Herstellung von Leiterplatten (engl. "printed circuit board", kurz PCB) können Modelle auf Basis künstlicher Intelligenz (kurz Kl) beispielsweise dazu verwendet werden, um Anomalien in oder auf einer Leiterplatte oder bei darauf angeordneten und befestigten Bauteilen, wie elektronische Bauteile oder Widerstände, zu erkennen.

Dabei ist es günstig ein Modell bei dieser Inspektions-Aufgabe heranzuziehen, welches auf einem großen Trainings-Datensatz beruht.

Jedoch kann die Verfügbarkeit entsprechender Trainings-Datensätze begrenzt sein und es werden Verfahren zum anonymisierten Training von Modellen bevorzugt, wie beispielsweise das Konzept auf Basis föderierten Lernens (engl. "federated learning", kurz FL).

FL ermöglicht es mehreren Geräten, Modelle des maschinellen Lernens gemeinsam zu trainieren, ohne Rohdaten gemeinsam zu nutzen.

Dabei kann es dennoch schwierig sein, detaillierte Datenanalysen mit Datenschutzbedenken in Einklang zu bringen, denn bei der Anwendung von FL kann ein Risiko vorliegen, bei welchem Modell-Parameter zurückentwickelt werden können, um die Trainingsdaten zu rekonstruieren, die in diesem Fall hochauflösende Bilder von proprietären PCB-Designs enthalten.

Dieses Risiko ist problematisch, da es sensible Designdetails für Unbefugte offenlegen und das geistige Eigentum des Unternehmens gefährden könnte, aber auch Einblicke auf die Systemsicherheit und Systemzuverlässigkeit geben kann und somit durch Täter ungünstig beeinflusst werden könnte.

Wenn Wettbewerber oder böswillige Akteure diese Bilder rekonstruieren können, könnten sie möglicherweise die einzigartigen Designs und Prozesse des Unternehmens replizieren und manipulierte Schaltungen, welche beispielsweise abgehört werden können, oder keine ausreichenden Schutzmechanismen aufweisen, vermarkten.

Daher ist der Schutz der Trainingsdaten vor Rekonstruktionsangriffen entscheidend, um den Wettbewerbsvorteil des Unternehmens zu erhalten.

Bei der visuellen Inspektion von Leiterplatten enthalten die hochauflösenden Bilder, die für die Fehlererkennung erforderlich sind, häufig sensible Designinformationen.

Es ist eine Herausforderung, diese proprietären Daten zu schützen und gleichzeitig sicherzustellen, dass das Verbundmodell genau bleibt.

Die Anonymisierung von Bildern zum Schutz der Privatsphäre kann die Fähigkeit des Modells beeinträchtigen, subtile Fehler zu erkennen.

Daher müssen die Hersteller diesen Kompromiss sorgfältig verwalten, um geistiges Eigentum zu schützen und gleichzeitig die Wirksamkeit des Inspektionsprozesses weiterhin auf einem hohen Niveau zu halten.

Im Stand der Technik ist eine sogenannte "granulare Kontrolle" über die Datenoffenlegung bekannt, bei welcher aktuelle Ansätze wie "Differential Privacy", sichere Aggregation und homomorphe Verschlüsselung sich in erster Linie auf die Anonymisierung des gesamten Datensatzes oder die Sicherung der Daten während der Übertragung und Berechnung konzentrieren.

Ihnen fehlt jedoch die Möglichkeit, bestimmte Teile der Daten selektiv zu anonymisieren, was in Szenarien wie der Leiterplattenherstellung, in denen einige Datensegmente sensibler sind als andere, von entscheidender Bedeutung sein könnte.

Im Stand der Technik ist ferner eine sogenannte "Balance zwischen Präzision und Datenschutz" bekannt, bei welcher oft einheitliche Datenschutzmaßnahmen für alle Datenpunkte angewendet werden, was zu einem Verlust der Genauigkeit führen kann, insbesondere bei Teilen der Daten, die nicht so sensibel sind.

Dies kann sich besonders nachteilig bei Anwendungen wie der visuellen Inspektion auswirken, bei denen das Modell hochauflösende Bilder mit großer Präzision analysieren muss.

Ein Bild-Text-Modell (engl. "vision language model", kurz VLM) ist ein Grund-Modell der künstlichen Intelligenz, ein sogenanntes "foundation model", und wird mit einem großen Datensatz von Bildern trainiert, wobei die Bilder mit textuellen Beschreibungen gepaart sind, wodurch visuelle Inhalte mit textuellen Konzepten verknüpft werden können.

VLMs können verschiedene Aufgaben wie eine Bildklassifizierung, eine Objekterkennung und das Setzen von Markierungen ausführen, ohne dass eine aufgabenspezifische Schulung erforderlich ist.

Ein Beispiel für ein beliebtes Open-Source-VLM ist CLIP, kurz für "Contrastive Language-Image Pretraining".

Dieser Ansatz hat verschiedene Anwendungsfälle in der Fertigungsindustrie, wie beispielsweise eine semantische Suche, bei der Hersteller VLMs nutzen können, um semantische Suchen in großen Bilddatenbanken durchzuführen und so das Auffinden und Abrufen relevanter Bilder von Teilen oder Produkten auf der Grundlage beschreibender Abfragen zu erleichtern.

Außerdem gibt es Anwendungen für eine effiziente Generierung von Trainingsdaten, bei welcher durch die Generierung von Beschriftungen und Anmerkungen durch textuelle Beschreibungen VLMs die Erstellung von Trainingsdatensätzen für andere in der Fertigung verwendete Modelle des maschinellen Lernens beschleunigen können.

Ferner gibt es Anwendungen für eine automatisierte Dokumentation, bei welcher VLMs bei der Erstellung und Aktualisierung von Dokumentationen helfen können, indem sie automatisch Beschreibungen oder Tags für Bilder von Maschinen, Komponenten und Prozessen generieren, was die Führung genauer Aufzeichnungen erleichtert.

Die Anwendung von VLMs in der Fertigung ist mit mehreren Herausforderungen verbunden, beispielsweise können Daten- und Domänenlücken vorliegen, denn Vision-Language-Modelle benötigen große und vielfältige Datensätze, um effektiv zu lernen.

Wenn die Trainingsdaten bestimmte Bereiche oder Nuancen, die für eine bestimmte Branche relevant sind, nicht abdecken, kann es schwierig sein, das Modell zu verallgemeinern oder bei diesen spezialisierten Aufgaben eine gute Leistung zu erbringen.

Im Stand der Technik sind VLMs beispielsweise zur Objekterkennung in einem digitalen Bild bekannt, wie beispielsweise in der Veröffentlichung Dieu-Thu Le, Jasper Uijlings, Raffaella Bernardi, "Exploiting language models for visual recognition", Proceedings of the 2013 Conference on Empirical Methods in Natural Language Processing, Seiten 769-779.

Ferner sind im Stand der Technik VLMs beispielsweise zur Erzeugung von Markierungen (engl. "label") bekannt, wie beispielsweise in der Veröffentlichung Junsu Kim, Yunhoe Ku, Jihyeon Kim, Junuk Cha, Seungryul Baek, "VLM-PL: Advanced Pseudo Labeling Approach for Class Incremental Object Detection via Vision-Language Model", Conference on Computer Vision and Pattern Recognition (CVPR) Workshops, 2024, Seiten 4170-4181.

Es ist daher Aufgabe der Erfindung eine Lösung bereitzustellen, bei welcher innerhalb eines Klienten-Server-Systems ein Modell auf Basis künstlicher Intelligenz effizient und genau bei hoher Systemsicherheit trainiert wird

Es soll demnach eine Lösung gefunden werden, bei welcher gezielt ausgewählte Daten aus großen Datensätzen auf anonyme Weise im Modell auf besonders effiziente Weise verarbeitet werden, und eine Rückverfolgbarkeit für diese einzelnen Daten unterbunden werden kann, und dadurch die Systemsicherheit und Systemzuverlässigkeit gegenüber unerwünschten externen Eingriffen und Manipulationsversuchen verbessert werden kann.

Die erfindungsgemäße Aufgabe wird durch ein computer-implementiertes Verfahren zum Erkennen eines Objekts in einem Bild gelöst, welches durch ein Klienten-Server-System mit einem Server und verbundenen Klienten ausgeführt wird, wobei folgende Schritte ausgeführt werden:
a) Bereitstellen einer jeweiligen lokalen Menge an Bildern mit dem Objekt an die jeweiligen Klienten,
b) Bereitstellen eines vortrainierten Grund-Modells zur Objekterkennung auf Basis künstlicher Intelligenz, wobei das Modell dazu eingerichtet ist, eine Maske und eine Markierung für einen ausgewählten Bereich eines Bildes zu erzeugen, an die jeweiligen Klienten,
c) Definieren von zumindest einem jeweiligen ausgewählten Bereich in den Bildern aus der jeweiligen lokalen Menge an Bildern, welcher geschützt werden soll,
d) Erzeugen einer jeweiligen lokalen Maske für den zumindest einen ausgewählten Bereich, und Anwenden der jeweiligen lokalen Maske auf die Bilder aus der Menge an Bildern,
e) Trainieren eines jeweiligen lokalen Erkennungs-Modells auf Basis föderierten Lernens mithilfe von künstlicher Intelligenz mit den jeweiligen lokalen maskierten Bildern aus der jeweiligen lokalen Menge an Bildern, und Aggregieren der jeweiligen lokalen Erkennungs-Modelle zu einem globalen Erkennungs-Modell am Server, und Verteilen des globalen Erkennungs-Modells vom Server an die Klienten,
f) Bereitstellen eines weiteren Bildes mit dem Objekt an einen, unter den Klienten ausgewählten Klienten,
g) Erkennen des Objekts im weiteren Bild mithilfe des empfangenen globalen Erkennungs-Modells am ausgewählten Klienten.

Dadurch kann erreicht werden, dass beispielsweise Vision-Foundation-Modelle (kurz VFM), also Modelle auf der Basis von Grund-Modellen (engl. "foundation model", kurz FM), für die Bildsegmentierung und Beschriftung genutzt werden, während Federated Learning sicherstellt, dass sensible PCB-Designdaten, also beispielsweise eine Leiterplatten-Konstruktion mit Leiterbahnen und Lagen und elektronischen Bauteilen, während des Kl-Modell-Trainings geschützt bleiben.

Der adaptive Maskierungs-Algorithmus bietet eine flexible Lösung, um die Privatsphäre und Systemsicherheit für die PCB-Elemente zu wahren, ohne die Genauigkeit der Fehlererkennung zu beeinträchtigen.

Die erhöhte Systemsicherheit ergibt sich aus dem verbesserten Schutz beispielsweise gegen Manipulation oder unerwünschte Vervielfältigung für einen illegalen Ersatzteilmarkt.

Eine, in einem Bild lokal selektive Anonymisierung ermöglicht es Herstellern, nur die sensibelsten Teile der Trainingsdaten zu schützen, wie beispielsweise bestimmte Bereiche von PCB-Bildern, die proprietäre Designs offenbaren, während andere Bereiche intakt bleiben.

Dadurch wird sichergestellt, dass die Modelle des maschinellen Lernens qualitativ hochwertige, unveränderte Daten für das Training erhalten und so die Genauigkeit dort erhalten bleibt, wo sie am dringendsten benötigt wird.

Dadurch kann ein optimierter Kompromiss zwischen Datenschutz und Nutzen erreicht werden, denn durch die selektive Anonymisierung von Daten können Hersteller den Kompromiss zwischen Datenschutz und Genauigkeit besser bewältigen.

Dieser Ansatz ermöglicht den Schutz des geistigen Eigentums, ohne die Leistung des Modells übermäßig zu beeinträchtigen, was bei Qualitätskontrollprozessen, bei denen die Erkennung subtiler Fehler unerlässlich ist, von entscheidender Bedeutung ist.

Mit anderen Worten erfolgt eine Integration von föderiertem Lernen in eine gezielte Anonymisierung von Teilen eines Bildes, wodurch das gesamte globale FL-Modell sensible Bildbereiche maskiert.

Dabei wird zunächst eine dezentrale Datenverarbeitung durchgeführt, bei welcher der Trainingsprozess für das Kl-Modell auf mehrere Edge-Geräte an verschiedenen Fertigungsstandorten, den sogenannten Klienten, stattfindet, wobei jeder Standort über einen eigenen Datensatz mit PCB-Bildern verfügt.

Die VFM- und Maskierungsalgorithmen werden lokal auf jedem Klienten angewendet, um die Bilder vorzuverarbeiten und zu segmentieren.

Anschließend erfolgt ein lokales Modell-Training, bei welchem ein lokales Fehlererkennungs-Modell mit den vorverarbeiteten und segmentierten Daten jedes Standorts trainiert wird.

Dabei wird sichergestellt, dass die verwendeten sensiblen Daten niemals den lokalen Standort verlassen, wodurch die Privatsphäre der proprietären PCB-Designs gewahrt werden kann.

Die sensiblen Daten der lokalen Bilder werden in einem begrenzten Bildbereich einem Maskierungsverfahren unterzogen, um jeweilige Details zu unterdrücken oder zu entfernen.

Nur die maskierten Bilder werden im lokalen Modell-Training verwendet, wodurch das lokale Modell nur Bilder mit nicht-sensitive Daten abbildet.

Dann erfolgt eine Modell-Aggregation, bei welcher in regelmäßigen Abständen jeder Standort die lokal trainierten Modell-Aktualisierungen an den zentralen Server sendet.

Der zentrale Server aggregiert diese Aktualisierungen, um ein globales Modell zu erstellen, das vom kollektiven Wissen aller lokalen Modelle profitiert.

Schließlich erfolgt ein iteratives Training, bei welchem das aktualisierte globale Modell zur weiteren lokalen Schulung an jeden Standort zurückgesendet wird, wodurch die Fehlererkennungs-Funktionen an allen Standorten iterativ verbessert werden, ohne sensible Daten preiszugeben.

In einer Weiterbildung der Erfindung ist es vorgesehen, dass das Erzeugen der Maskierung unter Verwendung von bereitgestellten Wertebereichen für eine Wichtigkeit hinsichtlich der Anonymisierung beziehungsweise Maskierung des zu markierenden, zumindest einen ausgewählten Bereichs erfolgt.

Dadurch wird erreicht, dass auf einfache Weise eine Reihung von Bereichen erfolgen kann, welche markiert werden sollen.

Durch Anwendung von Wertebereichen für die Maskierung kann beispielsweise sichergestellt werden, dass nur ein begrenzter Bereich analysiert wird und die Berechnungsaufwände für diesen Vorgang begrenzt werden, oder auch nur dann eine Markierung erfolgt, wenn eine hinreichende Konfidenz für die Erkennungsgenauigkeit des jeweiligen Bereichs vorliegt.

In einer Weiterbildung der Erfindung ist es vorgesehen, dass der bereitgestellte Wertebereich für Wichtigkeit einem auszuführenden Maskierungs-Verfahren zugeordnet wird.

Beispielsweise kann ein Maskierungs-Verfahren für den zu schützenden, ausgewählten Bildbereich durch ein Erzeugen eines Effekts von "Verschwimmen", einer Erzeugung eines Effekts von "Unschärfe", einem Erzeugen eines Effekts für ein "Verwischen" oder "Verwackeln", oder durch Anwendung eines "Verpixelungs"-Verfahrens oder eines "Farbverzerrungs"-Verfahrens in dem zu maskierenden oder zu schützenden zumindest einen ausgewählten Bereich durchgeführt werden.

Unter einer "Verpixelung" wird beispielsweise eine Reduktion der Bildauflösung im ausgewählten Bereich verstanden, um Details zu verschleiern, was in einem lokal begrenzten Bildbereich erfolgen kann.

Unter einer "Farbverzerrung" kann beispielsweise eine Modifikation der Farb- oder Helligkeitswerte einzelner Bildpunkte oder Bildebereiche im ausgewählten Bereich verstanden werden, oder auch eine Veränderung von Kontrasten von Konturen im ausgewählten Bereich des jeweiligen Bildes.

Dadurch kann ein effizientes Verfahren nach dem vorliegenden Grad in Sensitivität eines Bildausschnittes im Bild, also einem lokal begrenzten Bereich des Bildes gewählt werden und so die Berechnung der Maskierung der Wichtigkeit entsprechend effizient durchgeführt werden.

In einer Weiterbildung der Erfindung ist es vorgesehen, dass das Erzeugen einer Markierung unter Verwendung der Wichtigkeit erfolgt.

Durch Anwendung von Wertebereichen für die Markierung und/oder Maskierung kann beispielsweise sichergestellt werden, dass nur ein begrenzter Bereich analysiert werden muss und die Berechnungsaufwände für diesen Vorgang begrenzt werden, oder eine Warnung ausgegeben wird, wenn eine maximale anteilige Markierungs- oder Maskierungsfläche, gemessen an der Größe des jeweiligen Bildes, überschritten wird, oder auch nur dann eine Markierung oder Maskierung erfolgt, wenn eine hinreichende Konfidenz für die Erkennungsgenauigkeit durch das VFM des jeweiligen Bereichs vorliegt.

In einer Weiterbildung der Erfindung ist es vorgesehen, dass das Erzeugen einer jeweiligen lokalen Maske und/oder eine jeweiligen lokalen Markierung für den zumindest einen ausgewählten Bereich mithilfe des Grund-Modells, VFM erfolgt.

Dadurch kann sie Maske und/oder Markierung auf besonders einfache Weise erzeugt werden, das das VFM bereits im Klienten vorliegt.

In einer Weiterbildung der Erfindung ist es vorgesehen, dass vor dem Trainieren ein Erzeugen von einer jeweiligen lokalen Markierung für den zumindest einen ausgewählten Bereich, und ein Beschriften der Bilder aus der jeweiligen lokalen Menge an Bildern mit der jeweiligen lokalen Markierung erfolgt, und das Trainieren mit den jeweiligen lokalen maskierten und beschrifteten Bildern aus der jeweiligen lokalen Menge an Bildern erfolgt.

Mit anderen Worten ist ein optionales Erzeugen von einer jeweiligen lokalen Markierung für den zumindest einen ausgewählten Bereich mithilfe des Grund-Modells vor dem lokalen Training vorgesehen, und ein Beschriften der Bilder aus der jeweiligen lokalen Menge an Bildern mit der jeweiligen lokalen Markierung,

Dadurch wird erreicht, dass zusätzlich Markierungen vom VFM auf besonders einfache Weise erzeugt werden, dass das VFM bereits im Klienten vorliegt, und was die Modell-Genauigkeit zusätzlich erhöht.

Die erfindungsgemäße Aufgabe wird durch ein Klienten-Server-System zum Erkennen eines Objekts in einem Bild, umfassend einen Server und verbundene Klienten, welche jeweils eine Rechenvorrichtung mit einem Prozessor und einem Speicher aufweisen, und das Klienten-Server-System dazu eingerichtet ist, das erfindungsgemäße Verfahren auszuführen.

In einer Weiterbildung der Erfindung ist es vorgesehen, dass das Klienten-Server-System ferner einen bildgebenden Sensor umfasst, welcher dazu eingerichtet ist, ein hergestelltes Produkt als Objekt mithilfe eines digitalen Bilds zu erfassen, und dem Verfahren als weiteres Bild bereitzustellen.

Die erfindungsgemäße Aufgabe wird durch ein Computer-Programm-Produkt gelöst, umfassend Befehle, die bei der Ausführung des Programms durch einen Computer diesen veranlassen, das erfindungsgemäße Verfahren/die Schritte des Verfahrens auszuführen Die Erfindung wird anhand von eines Ausführungsbeispiels näher beschrieben. Die Figuren zeigen in
Fig. 1 ein Ausführungsbeispiel des erfindungsgemäßen Verfahrens in Form eines Flussdiagramms,
Fig. 2 ein Ausführungsbeispiel der Erfindung als Blockschaltbild,
Fig. 3 ein Ausführungsbeispiel der Erfindung in Form eines Pseudocodes.

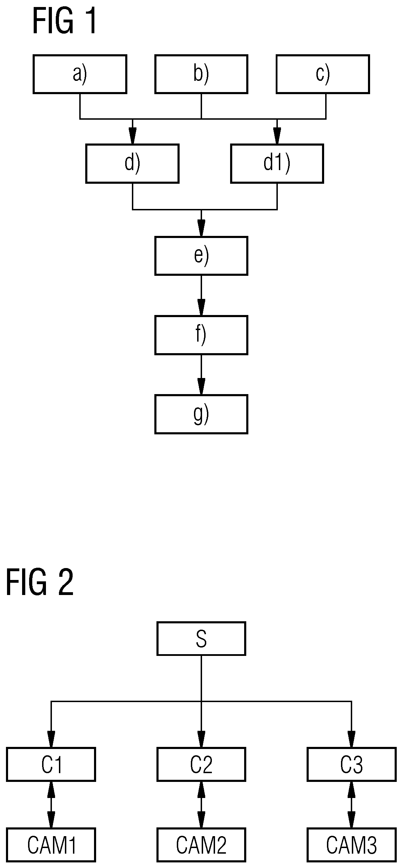

Fig. 1 stellt das Verfahren zum Erkennen eines Objekts in einem digitalen Bild beispielhaft dar.

Folgende Schritte werden dabei ausgeführt, wobei zumindest ein Schritt in einem Computer implementiert ist:
a) Bereitstellen einer jeweiligen lokalen Menge an Bildern mit dem Objekt an die jeweiligen Klienten C1-C3,
b) Bereitstellen eines vortrainierten Grund-Modells, VFM, zur Objekterkennung auf Basis künstlicher Intelligenz, wobei das Modell dazu eingerichtet ist, eine Maske und eine Markierung für einen ausgewählten Bereich eines Bildes zu erzeugen, an die jeweiligen Klienten C1-C3,
c) Definieren von zumindest einem jeweiligen ausgewählten Bereich in den Bildern aus der jeweiligen lokalen Menge an Bildern, welcher geschützt werden soll,
d) Erzeugen einer jeweiligen lokalen Maske für den zumindest einen ausgewählten Bereich mithilfe des Grund-Modells, VFM, und Anwenden der jeweiligen lokalen Maske auf die Bilder aus der Menge an Bildern,
d1) Erzeugen von einer jeweiligen lokalen Markierung für den zumindest einen ausgewählten Bereich mithilfe des Grund-Modells, VFM, und Beschriften der Bilder aus der jeweiligen lokalen Menge an Bildern mit der jeweiligen lokalen Markierung,
e) Trainieren eines jeweiligen lokalen Erkennungs-Modells auf Basis föderierten Lernens mithilfe von künstlicher Intelligenz mit den jeweiligen lokalen maskierten und beschrifteten Bildern aus der jeweiligen lokalen Menge an Bildern, und Aggregieren der jeweiligen lokalen Erkennungs-Modelle zu einem globalen Erkennungs-Modell am Server S, und Verteilen des globalen Erkennungs-Modells vom Server S an die Klienten C1-C3,
f) Bereitstellen eines weiteren Bildes mit dem Objekt an einen, unter den Klienten C1-C3 ausgewählten Klienten,
g) Erkennen des Objekts im weiteren Bild mithilfe des empfangenen globalen Erkennungs-Modells am ausgewählten Klienten.

Der Schritt d1) ist optional und dient der Verbesserung der Objekterkennung durch Verwendung von Markierungen.

Das Erzeugen der Markierung und/oder einer Maskierung kann unter Verwendung von bereitgestellten Wertebereichen für eine Wichtigkeit des zu markierenden, zumindest einen ausgewählten Bereichs im vorliegenden Bild erfolgen.

Die Wichtigkeit betrifft die Anonymisierung des zu markierenden, zumindest einen ausgewählten Bereichs, also einer Kennzeichnung der Sensibilität jenes Bildbereichs, der nicht an andere Einheiten im Klienten-Server-System, weitergegeben werden darf.

Das Erzeugen einer Maske kann unter Verwendung der Wichtigkeit erfolgen, wobei beispielsweise auch die Größe des Bereichs, welcher Anonymisiert werden soll, davon abhängen kann.

Mit anderen Worten kann der zu maskierende, das heißt zu anonymisierende oder zu schützende Bildbereich auch größer als der zumindest eine ausgewählte Bereich sein, um eine noch bessere "Abdeckung" zu erreichen.

Beispielsweise kann das Maskierungs-Verfahren durch ein Erzeugen von "Verschwimmen" eines Bildbereichs, einer Erzeugung einer lokalen "Unschärfe" im Bild, einem Erzeugen eines Effekts für "Verwischen" oder "Verwackeln" im Bildbereich erfolgen, wofür auch ein VLM beziehungsweise VFM angewendet werden kann.

Ferner kann durch Anwendung eines "Verpixelungs"-Verfahrens oder eines Farbverzerrungs-Verfahrens in dem zu maskierenden zumindest einen ausgewählten Bereich durchgeführt werden.

Der ausgewählte Bildbereich setzt sich aus einer Anzahl von Bildpunkten (engl. "pixel") zusammen, wobei die Bildpunkte zumeist eine zusammenhängende Fläche definieren.

Das große Sprachmodell kann ein Modell auf Basis künstlicher Intelligenz, insbesondere ein Grund-Modell, kurz FM, sein, beispielsweise ein Bild-Text-Modell.

Es ist nicht unbedingt notwendig, dass die bereitgestellten vortrainierten Grund-Modelle, VFM, an den Klienten C1-C3 ident sind, welche als lokale Modelle, beispielsweise als LM1, LM2, LM3 weiterverarbeitet werden.

Mit anderen Worten können unterschiedliche vortrainierte Grund-Modelle, VFM, den jeweiligen Klienten C1-C3 bereitgestellt werden.

Das globale Erkennungs-Modell kann als GM bezeichnet werden.

Der bereitgestellte Wertebereiche für eine Wichtigkeit eines ausgewählten Bildbereichs kann optional einem auszuführenden Markierungs-Verfahren zugeordnet werden.

Fig. 2 stellt ein Klienten-Server-System zum Erkennen eines Objekts in einem Bild dar.

Das Klienten-Server-System weist einen Server S und Klienten C1-C3 auf, welche jeweils einen Prozessor und einen Speicher umfassen.

Dementsprechend umfasst das Klienten-Server-System einen Prozessor und einen Speicher, um des erfindungsgemäßen Verfahrens auszuführen, wobei Teile des Verfahrens vorzugsweise auf dem leistungsfähigen Server S ausgeführt werden.

Das System umfasst einen Server S und verbundene Klienten C1-C3, welche jeweils eine Rechenvorrichtung mit einem Prozessor und einem Speicher aufweisen.

Das Klienten-Server-System ist dazu eingerichtet, das erfindungsgemäße Verfahren auszuführen.

Das Klienten-Server-System umfasst ferner für jeden Klienten C1-C3 jeweils einen verbundenen bildgebenden Sensor CAM1-CAM3, welcher dazu eingerichtet ist, ein hergestelltes Produkt als Objekt mithilfe eines digitalen Bilds zu erfassen.

Das beschriebene Verfahren kann daher von einem System zum Erkennen eines Objekts in einem digitalen Bild ausgeführt werden, welches eine Rechenvorrichtung mit einem Prozessor und einem Speicher umfasst.

Ein von einer Produktionsvorrichtung hergestelltes Produkt kann beispielsweise mithilfe eines Förderbands in das Sichtfeld der jeweiligen Kamera CAM1-CAM3 befördert werden.

Die jeweilige Kamera CAM1-CAM3 kann somit das hergestellte Produkt mithilfe eines digitalen Bildes als Objekt erfassen und durch Anwendung des genannten Verfahrens kann das Objekt im Bild erkannt werden und das daraus ermittelte Ergebnis weiterverarbeitet werden.

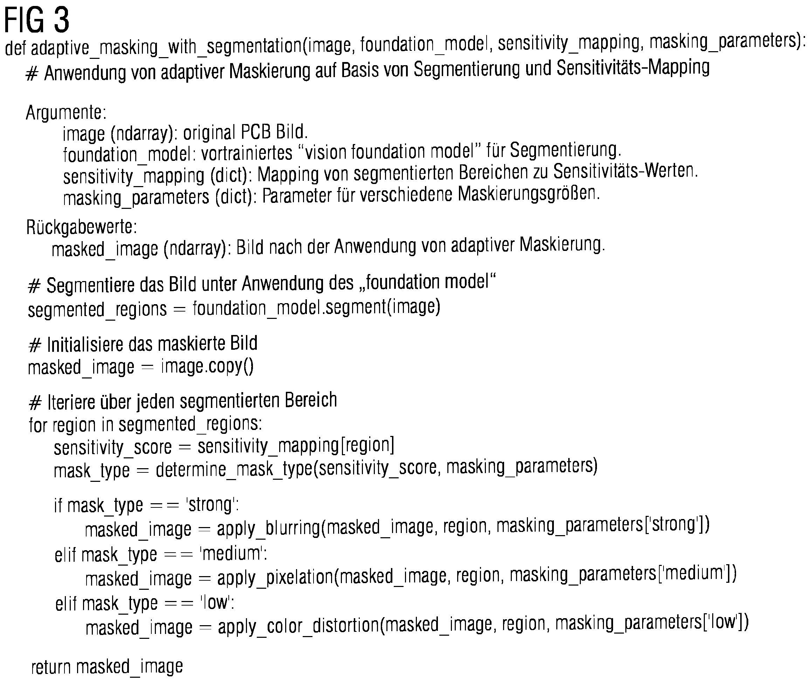

Fig. 3 zeigt ein Ausführungsbeispiel der Erfindung in Form eines Pseudocodes.

Es ist erkennbar, dass eine Maskierung eines Bereichs im Bild beispielsweise durch das Erzeugen von "Verschwimmen", einer "Unschärfe", von "Verwischen" oder "Verwackeln, sowie durch Verpixelung, also eine Reduktion der Bildauflösung im Bereich, oder auch durch eine Farbverzerrung durchgeführt werden kann.

*Unabhängig vom grammatikalischen Geschlecht eines bestimmten Begriffes sind Personen mit männlicher, weiblicher oder anderer Geschlechteridentität mit umfasst.*

### Bezugszeichenliste

- C1-C3: Klient
- CAM1-CAM3: Kamera
- S: Server

## Patentansprüche

1. Computer-implementiertes Verfahren zum Erkennen eines Objekts in einem Bild, welches durch ein Klienten-Server-System mit einem Server (S) und verbundenen Klienten (C1-C3) ausgeführt wird, wobei folgende Schritte ausgeführt werden:
a) Bereitstellen einer jeweiligen lokalen Menge an Bildern mit dem Objekt an die jeweiligen Klienten (C1-C3),
b) Bereitstellen eines vortrainierten Grund-Modells, VFM, zur Objekterkennung auf Basis künstlicher Intelligenz, wobei das Modell dazu eingerichtet ist, eine Maske und eine Markierung für einen ausgewählten Bereich eines Bildes zu erzeugen, an die jeweiligen Klienten (C1-C3),
c) Definieren von zumindest einem jeweiligen ausgewählten Bereich in den Bildern aus der jeweiligen lokalen Menge an Bildern, welcher geschützt werden soll,
d) Erzeugen einer jeweiligen lokalen Maske für den zumindest einen ausgewählten Bereich, und Anwenden der jeweiligen lokalen Maske auf die Bilder aus der Menge an Bildern,
e) Trainieren eines jeweiligen lokalen Erkennungs-Modells auf Basis föderierten Lernens mithilfe von künstlicher Intelligenz mit den jeweiligen lokalen maskierten Bildern aus der jeweiligen lokalen Menge an Bildern, und Aggregieren der jeweiligen lokalen Erkennungs-Modelle zu einem globalen Erkennungs-Modell am Server (S), und Verteilen des globalen Erkennungs-Modells vom Server (S) an die Klienten (C1-C3),
f) Bereitstellen eines weiteren Bildes mit dem Objekt an einen, unter den Klienten (C1-C3) ausgewählten Klienten,
g) Erkennen des Objekts im weiteren Bild mithilfe des empfangenen globalen Erkennungs-Modells am ausgewählten Klienten.

2. Verfahren nach dem vorhergehenden Anspruch, wobei das Erzeugen der Maskierung unter Verwendung von bereitgestellten Wertebereichen für eine Wichtigkeit hinsichtlich der Anonymisierung des zu markierenden, zumindest einen ausgewählten Bereichs erfolgt, wobei der Wert für die Wichtigkeit dieses Bereichs dem jeweiligen Klienten ebenfalls bereitgestellt wird.

3. Verfahren nach dem vorhergehenden Anspruch, wobei der bereitgestellte Wertebereichen für Wichtigkeit einem auszuführenden Maskierungs-Verfahren zugeordnet wird, beispielsweise ein Erzeugen eines Effekts von einem "Verschwimmen", einer Erzeugung von einer "Unschärfe", einem Erzeugen eines Effekts für ein "Verwischen" oder "Verwackeln, oder durch Anwendung eines Verpixelungs-Verfahrens oder eines Farbverzerrungs-Verfahrens in dem zu maskierenden zumindest einen ausgewählten Bereich durchgeführt werden kann.

4. Verfahren nach dem vorhergehenden Anspruch, wobei das Erzeugen einer Markierung unter Verwendung der Wichtigkeit erfolgt.

5. Verfahren nach einem der vorhergehenden Ansprüche, wobei das Erzeugen einer jeweiligen lokalen Maske und/oder einer jeweiligen lokalen Markierung für den zumindest einen ausgewählten Bereich mithilfe des Grund-Modells, VFM erfolgt.

6. Verfahren nach einem der vorhergehenden Ansprüche, wobei vor dem Trainieren im Schritt e) ein Erzeugen von eine jeweiligen lokalen Markierung für den zumindest einen ausgewählten Bereich, und ein Beschriften der Bilder aus der jeweiligen lokalen Menge an Bildern mit der jeweiligen lokalen Markierung erfolgt, und das Trainieren im Schritt e) mit den jeweiligen lokalen maskierten und beschrifteten Bildern aus der jeweiligen lokalen Menge an Bildern erfolgt.

7. Klienten-Server-System zum Erkennen eines Objekts in einem Bild, umfassend einen Server (S) und verbundene Klienten (C1-C3), welche jeweils eine Rechenvorrichtung mit einem Prozessor und einem Speicher aufweisen, und das Klienten-Server-System dazu eingerichtet ist, das Verfahren nach einem der vorhergehenden Ansprüche auszuführen.

8. Klienten-Server-System nach dem vorhergehenden Anspruch, welches ferner einen bildgebenden Sensor (CAM1-CAM3) umfasst, welcher dazu eingerichtet ist, ein hergestelltes Produkt als Objekt mithilfe eines digitalen Bilds zu erfassen und dem Verfahren als weiteres Bild bereitzustellen.

9. Computer-Programm-Produkt, umfassend Befehle, die bei der Ausführung des Programms durch das System nach einem der vorhergehenden System-Ansprüche dieses veranlassen, das Verfahren/die Schritte des Verfahrens nach einem der vorhergehenden Verfahrens-Ansprüche auszuführen.
